# EUROPEAN PATENT APPLICATION

(11) **EP 4 752 397 A1**
(43) Date of publication of application: **03.06.2026**
(21) Application number: 25218146.6
(22) Date of filing: 24.11.2025
(51) Int. Cl.: F16H 7/02, B07B 1/42, F16H 7/08, F16H 7/14

(54) **PULLEY DRIVE ASSEMBLY**

(30) Priority: 28.11.2024 GB 202417541
(71) Applicant: Terex GB Limited, Dungannon County Tyrone BT71 4DR (GB)
(72) Inventor: FANNING, CIARAN, Belfast, BT9 5QW (GB); McCANN, Declan, Dungannon, BT71 4DR (GB)
(74) Representative: FRKelly

(57) **Abstract**

A drive assembly comprises a motor with a pulley coupled to its rotary output shaft. A pulley support structure is fixed with respect to the motor and is coupled to the pulley by bearings configured to allow rotation of the pulley with respect to the support structure. The drive assembly is incorporated into a belt drive system. Lateral forces exerted on the pulley by the drive belt are transmitted to the pulley support structure via the bearings rather than being exerted on the rotary output shaft.

## Description

### FIELD OF THE INVENTION

The present invention relates to drive assemblies and drive systems including same. The invention relations particularly to pulley drive assemblies and to drive systems for vibratory apparatus and/or drive systems that include loop and pulley drives.

### BACKGROUND TO THE INVENTION

Material screening apparatus, commonly referred to as screen boxes, are usually coupled to a drive system for causing vibratory movement of the screen box to effect material screening. Typically, the drive system comprises a belt drive coupled between a hydraulic motor and an out-of-balance shaft of the screen box. During use, vibrational forces resulting from vibratory movement of the screen box are transferred to the drive shaft of the hydraulic motor via the belt drive. In particular, the vibrational forces are exerted on a pulley mounted on the hydraulic motor drive shaft, which in turn exerts a lateral, or cantilever type, load on the drive shaft. Hydraulic motors are relatively robust and tend to be able to tolerate, at least to some extent, loads caused by such forces. However, for hydraulic motors, and for motors in general, it would nevertheless be desirable to reduce lateral loads on the motor drive shaft in order to, for example, prolong the life of the motor, avoid sub-optimal performance of the motor and/or allow a smaller motor to be used.

The hydraulic motor is typically part of a hydraulic system that is powered by a diesel internal combustion engine (ICE). For at least environmental reasons, it is desirable to avoid or reduce the use of ICEs. In material screening apparatus and more generally in other applications, it would be desirable to use electric motors where practicable since electric motors can be powered using electric-only power systems (which do not require an ICE) or hybrid power systems (which make more efficient use of an ICE). However, electric motors tend to be less able to tolerate lateral or axial loads being exerted on their drive shaft. For example, permanent magnet DC motors do not tolerate such radial or axial loads, and can only be used to transmit torque. As a result, electric motors tend not to be suitable for use with screen boxes or other vibratory apparatus, particularly in drive systems that include a belt drive.

It would be desirable to mitigate the problems outlined above.

### SUMMARY OF THE INVENTION

From one aspect, the invention provides a drive assembly comprising: a motor having a rotary output shaft that is rotatable about a rotation axis; a pulley coupled to the rotary output shaft for rotation with the rotary output shaft about said rotation axis; and a pulley support structure, wherein the support structure is fixed with respect to said motor and is coupled to said pulley by at least one bearing that is configured to allow rotation of said pulley with respect to said support structure about said rotation axis.

Typically, the, or each, bearing comprises a first bearing surface provided on said pulley, and a second bearing surface provided on said support structure, and wherein said first and second bearing surfaces are engagable with each other directly, or are engagable with each other indirectly via at least one bearing element, preferably at least one rolling bearing element, said first and second bearing surfaces typically being annular. The respective second bearing surface for the or each bearing may be annular and extend around a portion of said pulley, the respective first bearing surface being provided on said portion of said pulley, and wherein said portion of the pulley is preferably an inner portion, typically a hub portion, of the pulley.

Preferably, the respective second bearing surface is provided by or supported by a respective formation of the support structure, the respective formation optionally comprising a ring, or a flange or a recess.

In preferred embodiments, the, or each, bearing comprises at least one rotary bearing, preferably at least one rolling element bearing.

In preferred embodiments, the, or each, bearing comprises an inner ring and an outer ring, the inner and outer rings being coaxial with each other and configured for relative rotation about said rotation axis, and wherein one of said inner and outer rings being provided on the pulley, the other of said inner and outer rings being provided on the support structure, and wherein each of said inner and outer rings has a respective bearing surface, the respective bearing surfaces being engagable with each other directly, or being engagable with each other indirectly via at least one bearing element, preferably at least one rolling bearing element, and wherein said at least one bearing element preferably comprises a plurality of bearing elements, preferably a plurality of rolling bearing elements, located between and spaced apart around said inner and outer rings. Typically, the inner ring is provided on said pulley, and the outer ring is provided on said support structure.

In preferred embodiments, said at least one bearing comprises first and second bearings spaced apart along the rotation axis, and preferably being located on respective sides of said pulley.

Said support structure may be fixed directly or indirectly to said motor, or may be integrally formed with said motor. Typically, said motor comprises a housing, said rotary output shaft being rotatable with respect to said housing about said rotation axis, and wherein said support structure may be fixed directly or indirectly to said housing, or may be integrally formed with said housing.

In typical embodiments, said rotary output shaft is coupled to the motor, typically to the housing of the motor, and/or to the support structure by at least one output shaft bearing that is configured to allow rotation of said rotary output shaft with respect to the motor, typically the housing of the motor, and/or the support structure about said rotation axis. The, or each, rotary shaft bearing preferably comprises at least one rotary bearing, preferably at least one rolling element bearing.

In typical embodiments, said motor comprises a housing, said rotary output shaft being rotatable with respect to said housing about said rotation axis, and wherein a portion of said output shaft projects out of said housing, the pulley being coupled to said portion of the output shaft. Said rotary output shaft may project through an end face of said housing, said support structure being fixed directly or indirectly to said end face, or being integrally formed with said end face.

In preferred embodiments, said support structure is shaped and dimensioned to provide a housing in which said pulley is located. Preferably, said first bearing is provided at a first side of the housing, the second bearing is provided at a second side of the housing, the pulley being located between the first and second sides of the housing. Preferably, the support structure comprises a base portion and a removable portion that together provide said housing, wherein said second bearing is provided on said removable portion.

In typical embodiments, the drive assembly includes a stand, said motor, pulley and pulley support structure being mounted directly or indirectly on said stand.

In preferred embodiments, said motor is an electric motor, preferably a DC motor, or wherein said motor is a hydraulic motor.

A further aspect of the invention provides a drive system comprising the drive assembly of said one aspect of the invention, wherein said pulley is a drive pulley of said drive system and is coupled to a driven pulley of said drive system by at least one drive loop, preferably at least one drive belt, in order to drive said driven pulley.

From another aspect the invention provides a vibratory apparatus comprising a vibratory drive system, wherein the vibratory drive system comprises the drive system of said further aspect of the invention. In preferred embodiments, the vibratory apparatus is a material screening apparatus.

Preferred embodiments include a pulley housing arrangement with integrated rolling element bearing(s) to accept radial, or lateral, loads. In preferred embodiments, the drive pulley is held captive in the pulley housing, the housing advantageously including a removable cap with one of the bearings. Together, the pulley housing and cap carry all, or substantially all, of the radial load exerted on the drive pulley. As a result, the motor is able to provide torque with reduced or eliminated load on the motor shaft. The additional bearing in the cap provides support and stability to the drive pulley, helping to reduce the cantilever effect on the motor shaft.

Further advantageous aspects of the invention will be apparent to those ordinarily skilled in the art upon review of the following description of a specific embodiment and with reference to the accompanying drawings.

### BRIEF DESCRIPTION OF THE DRAWINGS

An embodiment of the invention is now described by way of example and with reference to the accompanying drawings in which:
Figure 1 is an isometric view of a material screening apparatus embodying one aspect of the invention, the apparatus including a drive system embodying another aspect of the invention;
Figure 1A is an enlarged view of the drive system of Figure 1;
Figure 2 is an isometric view of a drive assembly embodying another aspect of the invention and being part of the drive system of Figure 1;
Figure 3 is a side view of the drive assembly of Figure 2;
Figure 4 is a sectioned isometric view of the drive assembly of Figure 2; and
Figure 5 is a sectioned end view of the drive assembly of Figure 2.

### DETAILED DESCRIPTION OF THE DRAWINGS

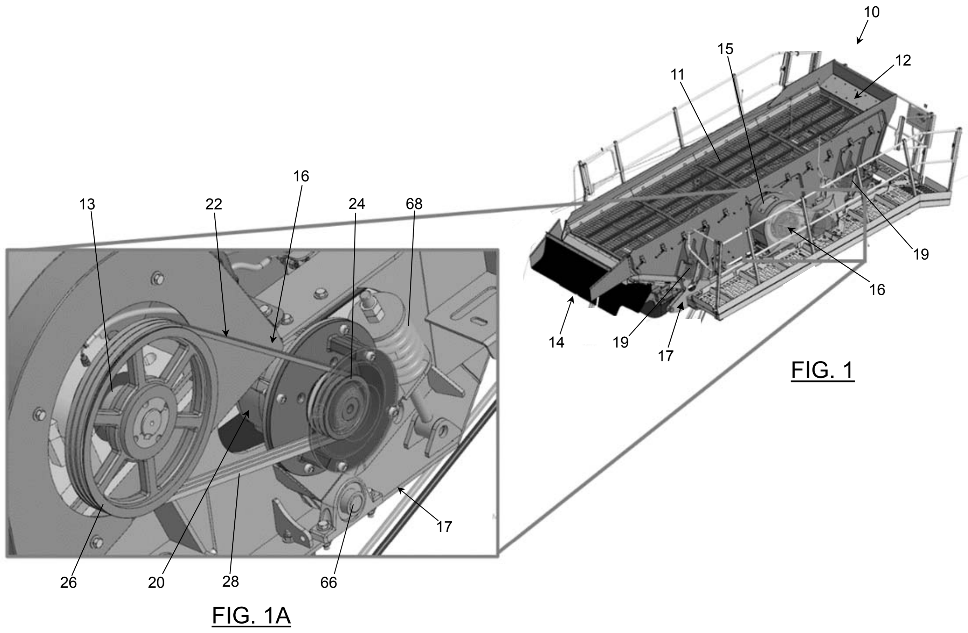

Referring now in particular to Figures 1 and 1A of the drawings there is shown, generally indicated as 10, a screening apparatus embodying one aspect of the invention and suitable for use with other aspects of the present invention. The screening apparatus 10 may be of any conventional type or configuration, i.e. the invention is not limited to use with the particular type or configuration of the illustrated screening apparatus.

Typically, the screening apparatus 10 comprises one or more screening deck 11, each deck 11 comprising screening media (e.g. screening mesh or screening bars) for screening material such as aggregate material (not shown). Screening typically involves separation of particulate material according to particle size. Screening apparatus such as the apparatus of Figure 1 are commonly referred to as screen boxes. The screening apparatus 10 has an inlet 12 at one end and an outlet 14 at the other end. In use, material to be screened is deposited onto the top screening deck 11 via the inlet 12 whereupon relatively small particles pass through the screening deck 11 onto a lower screening deck (if present), or to a collection device (e.g. a conveyor, not shown), while larger particles remain on the top deck 11. The particles that remain on the top deck 11 travel along the top deck 11 and exit the apparatus 10 via the outlet 14, may be deposited onto a conveyor (not shown) or a chute (not shown) or otherwise collected by any suitable means.

In order to facilitate screening, the apparatus 10 includes a drive system 16 for causing the screening apparatus 10 to vibrate, typically by rotating one or more eccentric mass(es) or out-of-balance wheel(s) that are rotatably coupled to the screening apparatus 10, typically being provided on a rotatable shaft 13 that is coupled to the screening apparatus 10. In the example Figures 1 and 1A, rotatable shaft 13 carries an eccentric mass that is not visible as it is concealed by housing 15. In this example, the drive system 16 rotates the shaft 13, and therefore also the eccentric mass, thereby imparting vibratory movement to the screening apparatus 10. When vibrating, the screening apparatus 10 (or other vibratory apparatus as applicable) moves in a reciprocating or oscillatory manner, which may be linear or orbital (e.g. circular or elliptical). Typically, the drive system 16 causes the screening apparatus 10 to vibrate with respect to a base 17, usually comprising a frame and/or a chassis. The screening apparatus 10 may be mounted on or coupled to the base in any suitable manner that supports the vibratory movement, e.g. by one or more springs 19. The drive system 16 and the rotatable eccentric mass(es) or out-of-balance wheel(s) may collectively be referred to as a vibratory drive system, and the screening apparatus 10 may be referred to as a vibratory screening apparatus. In use, the vibration of the screening apparatus 10 facilitates the separation of material by the screening deck(s) 11 and the travelling of material along the screening deck(s) 11.

In typical embodiments, the drive system 16 comprises a motor 20 coupled to a loop and pulley drive 22. The loop and pulley drive 22 comprises a driving, or drive, pulley 24, which is coupled to the motor 20, and a driven pulley 26, which in this example is coupled to the shaft 13 but which may alternatively be coupled to any other load being driven by the drive system 16. The pulleys 24, 26 are coupled together by a drive loop, which typically comprises a drive belt 28 (in which case the loop and pulley drive 22 may be referred to as a belt drive) but which may take any other suitable form, e.g. a chain. In some embodiments (including the embodiment of Figure 1), the motor 20 and drive pulley 24 are mounted on the base 17, while the driven pulley 26 is mounted on the screening apparatus 10. Alternatively, the motor 20 and drive pulley 24 may be mounted on the screening apparatus 10. In use, the vibratory movement of the screening apparatus 10 causes forces to be exerted on the drive pulley 24 via the drive belt 28, in particular lateral forces that are perpendicular to the rotational axis of the drive pulley 24.

It will be understood that embodiments of the invention are limited to screening apparatus and may be used in any suitable application, especially applications that use a drive system that includes a loop and pulley drive, and/or with other apparatus that vibrate in use, and which may generally be referred to as vibrating apparatus or vibratory apparatus. Examples of other vibrating apparatus with which embodiments of the invention may be used include feeding apparatus, walkways, conveyors, hoppers, crushers, underpans for crushers and other material processing apparatus and accessories. More generally, drive systems embodying the invention may be included in vibratory drive systems of vibratory apparatus, e.g. screen boxes, conveyors, feeders and so on, particularly (but not exclusively) vibratory material processing apparatus.

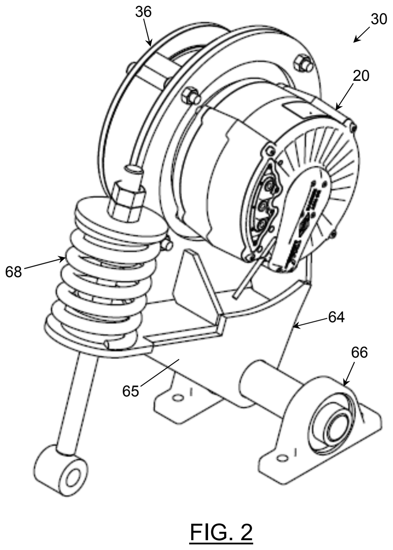

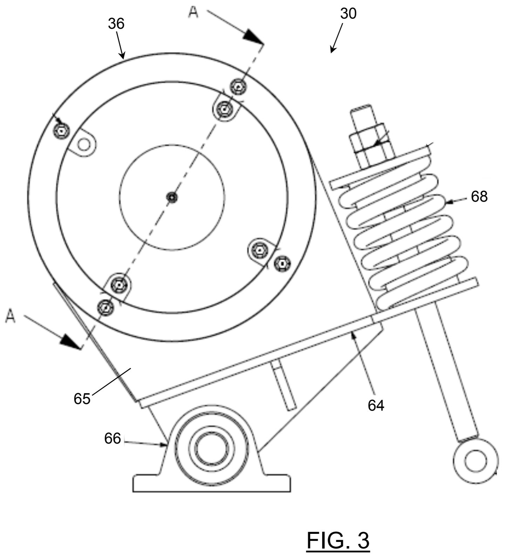

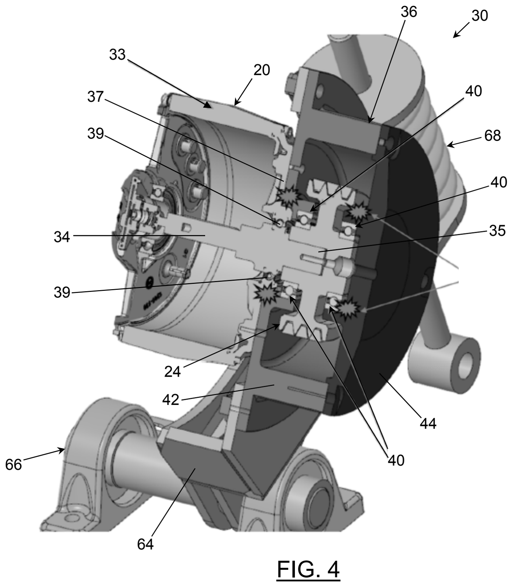

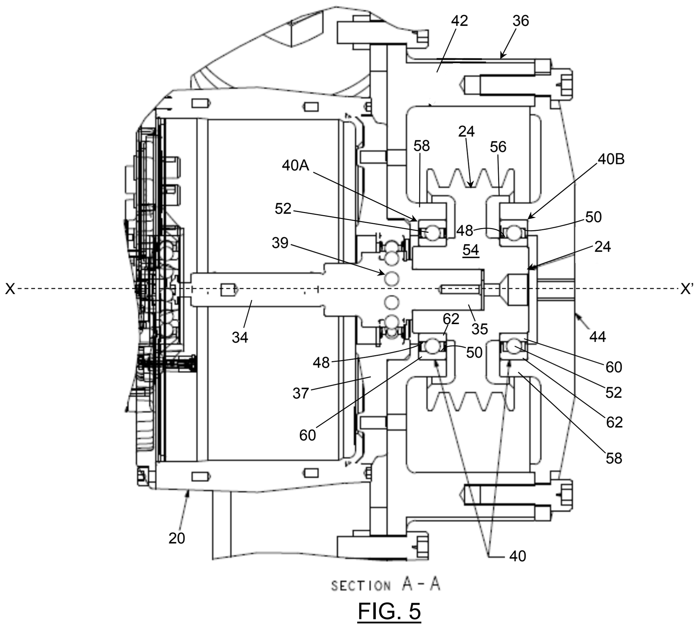

Referring now in particular to Figures 2 to 5, there is shown a drive assembly 30, the drive assembly 30 embodying an aspect of the invention and being part of the drive system 16, which embodies another aspect of the invention. The drive assembly comprises a motor 20 having a rotary output shaft 34 that is rotatable about a rotation axis, which is indicated as X-X' in Figure 5. In preferred embodiments, the motor 20 is an electric motor, preferably a DC motor, e.g. a permanent magnet DC motor. In alternative embodiments, the motor 20 may be an AC motor (e.g. induction motor or synchronous motor) or any other type of electric or non-electric motor (e.g. a hydraulic motor or a pneumatic motor). Particularly in the case of DC motors or other electric motors, to avoid failure of the motor, or at least sub-optimal performance of the motor, it is desirable to prevent forces from being exerted on the output shaft 34 axially (i.e. along the X-X' axis) or laterally (i.e. perpendicular to the X-X' axis), or at least to minimize such axial and lateral forces. For other types of motors, e.g. hydraulic motors, it is still desirable to reduce or minimise these forces in order to avoid sub-optimal performance of the motor and/or to prolong the useful life of the motor. As outlined above, the drive belt 28 tends to exert lateral forces on the drive pulley 24, and the drive assembly 30 is configured to prevent, minimize or at least reduce transmission of such forces to the output shaft 34 as is described in more detail hereinafter.

The motor 20 may be conventional, and only those components of the motor 20 that are helpful for understanding the invention are shown in the drawings. The output shaft 34 may be connected to or otherwise coupled to the rotor of the motor 20 such that it is rotated by the rotor during use. The motor 20 comprises a motor housing 33 (which may also be referred to as the motor frame or casing), which houses the motor components including part of the output shaft 34. When the motor 20 is running, the output shaft 34 is rotated, and it rotates with respect to the housing 33 about the rotation axis X-X'. A portion, in particular the end portion 35, of the output shaft 34 projects out of the housing 33, the drive pulley 24 being coupled to the exposed portion 35. Typically, the output shaft 34 projects through an end face 37 of the housing 33, the end face 37 typically being perpendicularly, or substantially perpendicularly, disposed with respect to the rotation axis X-X'.

In typical embodiments, the output shaft 34 is coupled to the housing 33 by at least one output shaft bearing 39 that is configured to allow (and support), rotation of the output shaft 34 with respect to the housing 33. In typical embodiments, the output shaft bearing 39 is provided in the end face 37 of the housing 33. The output shaft bearing 39 may be of any conventional type, and is typically a rotary bearing. In preferred embodiments, the output shaft bearing 39 comprises a rolling element bearing, but may alternatively comprise a journal bearing for example. For example, as is shown in the illustrated embodiment, the output shaft bearing 39 may comprise a plurality of rolling elements (e.g. ball bearings) arranged annularly around the output shaft 34 between respective bearing surfaces provided on the shaft 34 and the housing 33.

The drive assembly 30 includes the drive pulley 24, which is coupled to the rotary output shaft 34 and which, in use, rotates with the rotary output shaft 34 about the rotation axis X-X' under the action of the motor 20. The drive assembly 30 may be referred to as a pulley drive assembly. The drive pulley 24 may be fixed to the output shaft 34, conveniently to the end 35 of the output shaft, by any suitable fixing means, e.g. a bolt(s) or other mechanical fixing(s). As such, the drive pulley 24 is located outside of the motor housing 33, typically adjacent the end face 37. In use, the motor 20 rotates the output shaft 34, and therefore also the drive pulley 24. In preferred embodiments, the pulley 24 may be described as a captive pulley 24. When the drive assembly 30 is incorporated into the drive system 16, rotation of the drive pulley 24 drives, i.e. rotates, the driven pulley 26 via the drive belt 28. When the drive system 16 is coupled to the screening apparatus 10 (or other apparatus), rotation of the driven pulley 26 rotates the eccentrically weighted shaft 13 (or other load as applicable) in order to impart vibrations to the screen box.

The drive assembly 30 includes a pulley support structure 36 that is fixed with respect to the motor 20 and is coupled to the drive pulley 24 by at least one bearing 40 that is configured to allow, or support, rotation (i.e. at least some rotational movement) of the drive pulley 24 with respect to the support structure 36 about the rotation axis X-X'.

In preferred embodiments, the pulley support structure 36 is fixed directly or indirectly to the motor 20, typically to the motor housing 33, conveniently to the end face 37 of the motor housing 33. This may be achieved using any suitable conventional fixing means, e.g. bolt(s), screw(s) or other mechanical fixing(s). Alternatively, the pulley support structure 36 may be integrally formed with the motor 20, in particular with the motor housing 33, conveniently with the end face 37 of the motor housing 33. Optionally, the output shaft 34 may be coupled to the support structure 36 by one or more shaft bearing that is configured to allow rotation of the rotary output shaft with respect to the support structure about the rotation axis.

The pulley support structure 36 may take any form that enables it to provide the functionality described herein, in particular to support the provision of the, or each, bearing 40 in order that forces, in particular lateral forces, exerted on the drive pulley 24 during use are at least partly transmitted to the support structure 36 via the, or each, bearing 40. As a result, such forces are not transmitted to the output shaft 34. The preferred arrangement is such that all, or substantially all, of the lateral forces exerted on the drive pulley 24 are transmitted to the support structure 36. To this end, the support structure 36 typically comprises one or more formations configured to provide, or support the provision of, bearing surface(s) for the, or each, bearing. In preferred embodiments, the support structure 36 is shaped and dimensioned to provide a housing in which the drive pulley 24 is located, and in which it rotates, in use, about axis X-X'. Preferably, the support structure 36 comprises a base portion 42 and a removable portion 44 that together provide the pulley housing. The base portion 42 may be fixed directly or indirectly to the motor housing 33. The base portion 42 may be shaped and dimensioned to provide a cavity for receiving the drive pulley 24, and may for example be cup-like in shape. The removable portion 44 preferably takes the form of a removable cap or lid which, when removed, allows access to the cavity to facilitate maintenance and/or assembly (e.g. to facilitate fitting the drive pulley 24 to the shaft 34, or fitting the drive belt 38 to the drive pulley 34. The preferred arrangement is that the removable portion 44 provides, or is located at, the face of the support structure 36 that is distal the end face 37 of the motor housing 33, and may be parallely, or substantially parallely, disposed with respect to the end face 37. The removable portion 44 may be fitted to the base portion 42 using one or more releasable fixings, e.g. screw(s).

The, or each, bearing 40 comprises a first bearing surface 48 provided on the drive pulley 24, and a second bearing surface 50 provided on the support structure 36, the bearing surfaces 48, 50 typically being annular. The respective first and second bearing surfaces 48, 50 are engagable with each other directly (e.g. in embodiments where the bearing 40 is a journal bearing or slide bearing), or are engagable with each other indirectly via at least one bearing element (e.g. an intermediate bushing or rolling element(s)). In preferred embodiments, the, or each, bearing 40 comprises a rotary bearing, preferably a rolling element bearing comprising one or more rolling element 52.

In preferred embodiments, the respective second bearing surface 50 for the, or each, bearing 40, is annular and extends around a portion of the drive pulley 24, the respective first bearing surface 48 being provided on the portion of the pulley 24. The portion of the pulley 24 is preferably an inner portion, typically a hub portion 54, of the pulley 24.

The respective first bearing surface 48 may be provided by, or supported by, any suitable part of the drive pulley 24, e.g. an outer surface of the hub 54 (as illustrated) or an inner surface of the rim 56. The respective second bearing surface 50 may be provided by, or supported by, a respective formation 58 of the support structure 36, the respective formation for example comprising a ring, or a flange or a recess. In any case, each bearing surface 48, 50 may be integrally formed with the drive pulley 24 or support structure 36, as applicable, or may be provided by a respective bearing element 60, 62 (e.g. in the form of a ring) provided on the drive pulley 24 or support structure 36, as applicable. In embodiments where each bearing 40 is a rolling element bearing, each bearing surface 48, 50 may be said to comprise a raceway.

In preferred embodiments, each bearing 40 comprises an inner ring 60 and an outer ring 62, the inner and outer rings 60, 62 being coaxial with each other and configured for relative rotation about the rotation axis X-X'. One of the inner and outer rings 60, 62 is provided on the drive pulley 24, the other of the inner and outer rings 60, 62 being provided on the support structure 36. In preferred embodiments, the inner ring 60 is provided on the drive pulley 24 and the outer ring 62 is provided on the support structure 36. Alternatively, the inner ring 60 may be provided on the support structure 36 (e.g. on the outer surface of formation 58 as opposed to the inner surface as shown in the drawings) and the outer ring 62 may be provided on the drive pulley 24 (e.g. on an inner surface of the rim as opposed to an outer surface of the hub 54). Typically, the ring 60, 62 on the pulley 24 rotates, while the other ring 62, 60 on the support structure 36 is fixed with respect to the assembly. Each of the inner and outer rings 60, 62 has a respective bearing surface (i.e. the bearing surfaces 48, 50 respectively in the illustrated embodiment), the respective bearing surfaces being engagable with each other directly, or being engagable with each other indirectly via at least one bearing element, preferably at least one rolling bearing element 52 (e.g. ball bearing(s) or roller bearing(s)). In preferred embodiments, a plurality of rolling bearing elements 52 are located between and spaced apart around the inner and outer rings 60, 62.

In preferred embodiments, the drive assembly 30 comprises first and second instances 40A, 40B of the bearings 40, spaced apart along the rotation axis X-X'. Preferably, the first and second bearings 40A, 40B are located on respective sides of the drive pulley 24. This arrangement helps to distribute the load/forces exerted on the pulley 24 during use and to improve stability.

In preferred embodiments, the respective second bearing surface 50 for the outermost bearing 40B (i.e. the bearing 40B located at the outer side of the pulley 24 rather than at the motor side of the pulley 24) may be provided by, or supported by, a formation 58 provided on the removable portion 44 of the support structure 36. This arrangement facilitates the assembly process.

In typical embodiments, the drive assembly 30 includes a stand 64 on which the motor 20, pulley support structure 36 and drive pulley 24 are directly or indirectly mounted or mountable. The stand 64 typically comprises a body 65. Either one or both of the motor 20 and the pulley support structure 36 may be mounted on the body 65. By way of example, in the illustrated embodiment, the support structure 36 is fixed to the body 65, and the motor 20 is indirectly mounted on the body 65 because it is fixed to the support structure 36. The stand 64 typically includes a mount 66 for mounting the stand 64, and therefore the drive assembly 30 to a suitable base, i.e. the base 17 in the illustrated embodiment. The mount 66 is configured to allow pivoting movement of the stand 64, and therefore of the drive assembly 30, with respect to the base 17 about an axis that is parallel with the rotation axis X-X'. The mount 66 may be of any convenient conventional form, e.g. comprising a rotational bearing. The stand 64 may also include a shock absorber 68, or damper, for connection to the base 17.

In some embodiments (including the embodiment of Figure 1), the drive assembly 30 is mounted on the base 17 via the stand 64, while the driven pulley 26 is mounted on the screening apparatus 10 (or other apparatus/load as applicable). In use, the vibratory movement of the screening apparatus 10 causes forces to be exerted on the drive pulley 24 via the drive belt 28. Lateral forces exerted on the drive pulley 24 are transmitted via the bearings 40 to the support structure 36. In addition, the mount 66 allows the drive assembly 30 to pivot with respect to the base 17 in response to the exerted forces. The pivoting movement of the drive assembly 30 is controlled by the damper 68.

The invention is not limited by the embodiments described herein which may be modified or varied without departing from the scope of the invention.

## Claims

1. A drive assembly comprising:
a motor having a rotary output shaft that is rotatable about a rotation axis;
a pulley coupled to the rotary output shaft for rotation with the rotary output shaft about said rotation axis; and
a pulley support structure,
wherein the support structure is fixed with respect to said motor and is coupled to said pulley by at least one bearing that is configured to allow rotational movement of said pulley with respect to said support structure about said rotation axis.

2. The drive assembly of claim 1, wherein the, or each, bearing comprises a first bearing surface provided on said pulley, and a second bearing surface provided on said support structure, and wherein said first and second bearing surfaces are engagable with each other directly, or are engagable with each other indirectly via at least one bearing element, preferably at least one rolling bearing element, said first and second bearing surfaces typically being annular.

3. The drive assembly of claim 2, wherein the respective second bearing surface for the or each bearing is annular and extends around a portion of said pulley, the respective first bearing surface being provided on said portion of said pulley, and wherein said portion of the pulley is preferably an inner portion, typically a hub portion, of the pulley.

4. The drive assembly of claim 2 or 3, wherein the respective second bearing surface is provided by or supported by a respective formation of the support structure, the respective formation optionally comprising a ring, or a flange or a recess.

5. The drive assembly of any preceding claim, wherein the, or each, bearing comprises at least one rotary bearing, preferably at least one rolling element bearing.

6. The drive assembly of any preceding claim, wherein the, or each, bearing comprises an inner ring and an outer ring, the inner and outer rings being coaxial with each other and configured for relative rotation about said rotation axis, and wherein one of said inner and outer rings being provided on the pulley, the other of said inner and outer rings being provided on the support structure, and wherein each of said inner and outer rings has a respective bearing surface, the respective bearing surfaces being engagable with each other directly, or being engagable with each other indirectly via at least one bearing element, preferably at least one rolling bearing element, and wherein said at least one bearing element preferably comprises a plurality of bearing elements, preferably a plurality of rolling bearing elements, located between and spaced apart around said inner and outer rings, and wherein, preferably, the inner ring is provided on said pulley, and the outer ring is provided on said support structure.

7. The drive assembly of any preceding claim, wherein said at least one bearing comprises first and second bearings spaced apart along the rotation axis, and preferably being located on respective sides of said pulley.

8. The drive assembly of any preceding claim, wherein said support structure is fixed directly or indirectly to said motor, or is integrally formed with said motor, and wherein, preferably, said motor comprises a housing, said rotary output shaft being rotatable with respect to said housing about said rotation axis, and wherein said support structure is fixed directly or indirectly to said housing, or is integrally formed with said housing.

9. The drive assembly of any preceding claim, wherein said rotary output shaft is coupled to the motor, typically to the housing of the motor, and/or to the support structure by at least one output shaft bearing that is configured to allow rotation of said rotary output shaft with respect to the motor, typically the housing of the motor, and/or the support structure about said rotation axis, and wherein, preferably, the, or each, rotary shaft bearing comprises at least one rotary bearing, preferably at least one rolling element bearing.

10. The drive assembly of any preceding claim, wherein said motor comprises a housing, said rotary output shaft being rotatable with respect to said housing about said rotation axis, and wherein a portion of said output shaft projects out of said housing, the pulley being coupled to said portion of the output shaft, and wherein, preferably, the rotary output shaft projects through an end face of said housing, said support structure being fixed directly or indirectly to said end face, or being integrally formed with said end face.

11. The drive assembly of any preceding claim, wherein said support structure is shaped and dimensioned to provide a housing in which said pulley is located, and wherein, preferably, said at least one bearing comprises first and second bearings spaced apart along the rotation axis, said first bearing being provided at a first side of the housing, the second bearing being provided at a second side of the housing, the pulley being located between the first and second sides of the housing, and wherein, preferably, the support structure comprises a base portion and a removable portion that together provide said housing, wherein said second bearing is provided on said removable portion.

12. The drive assembly of any preceding claim, further including a stand, said motor, pulley and pulley support structure being mounted directly or indirectly on said stand.

13. The drive assembly of any preceding claim, wherein said motor is an electric motor, preferably a DC motor, or wherein said motor is a hydraulic motor.

14. A drive system comprising a drive assembly as claimed in any preceding claim, wherein said pulley is a drive pulley of said drive system and is coupled to a driven pulley of said drive system by at least one drive loop, preferably at least one drive belt, in order to drive said driven pulley.

15. A vibratory apparatus comprising a vibratory drive system, wherein the vibratory drive system comprises a drive system as claimed in claim 14, and wherein the vibratory apparatus may be a material screening apparatus.
